# EUROPEAN PATENT SPECIFICATION

(11) **EP 3 889 388 B1**
(45) Date of publication and mention of the grant of the patent: **12.11.2025**
(21) Application number: 20166668.2
(22) Date of filing: 30.03.2020
(51) Int. Cl.: E21B 1/26, E21B 4/14, E21C 27/12, E21C 27/28, B25D 9/00, B25D 17/24, B25D 17/26, E02F 3/96, E02F 5/30, E21B 6/00, E21B 7/02

(54) **APPARATUS, ROCK BREAKING MACHINE AND METHOD OF MONITORING ROCK BREAKING MACHINE**
VORRICHTUNG, STEINBRECHMASCHINE UND VERFAHREN ZUR ÜBERWACHUNG DER STEINBRECHMASCHINE
APPAREIL, MACHINE D'ABATTAGE DE ROCHE ET PROCÉDÉ DE SURVEILLANCE D'UNE MACHINE D'ABATTAGE DE ROCHE

(43) Date of publication of application: 06.10.2021
(73) Proprietor: Sandvik Mining and Construction Oy, 33330 Tampere (FI)
(72) Inventor: ANTTILA, Erkki, 33311 Tampere (FI)
(74) Representative: Sandvik

(56) References cited:
- EP-A1- 1 461 187
- EP-A1- 2 811 106
- EP-A1- 3 617 442
- JP-A- H08 135 204

## Description

### Background of the invention

The invention relates to a hydraulic rock drilling machine and to a method for monitoring it.

The field of the invention is defined more specifically in the preambles of the independent claims.

In mines and construction sites there exists a need to break rock material. The rock material to be broken may be stones or boulders whereby hydraulic breaking hammers are implemented. When breaking undetached rock material, hydraulic drilling machines are used for making drill holes prior to blasting the rock surface. These both types of hydraulic rock breaking machines are equipped with hydraulically operable percussion devices. Examples of hydraulic rock breaking machines are disclosed in patent publications JP H08 135204 A, EP 2811106 A1 and EP 1461187 A1. Operation of the percussion device and the entire rock breaking machine needs to be monitored in order to control the machine properly. Therefore different measuring and monitoring systems are developed for this purpose. However, the known monitoring systems have shown to include disadvantages.

### Summary of the invention

The invention is defined by the appended claims. An object of the invention is to provide a novel and improved rock drilling machine, and method for monitoring operation of a rock drilling machine.

The rock drilling machine according to the invention is characterized by the characterizing features of the independent apparatus claim.

The method according to the invention is characterized by the characterizing features of the independent method claim. Preferred embodiments of the invention are defined in the dependent claims.

### Brief description of the disclosure

An idea of the disclosed solution is that a hydraulically operable rock drilling machine is disclosed. The hydraulically operable rock drilling machine comprises a body, a hydraulically operating percussion device mounted inside the body whereby a reciprocating percussion piston of the percussion device is moved by means of pressurized hydraulic fluid and configured to generate impact pulses by means of the reciprocating percussion piston to a tool mountable to a front end of the body. The rock drilling machine comprises at least one apparatus for sensing prevailing fluid pressure inside the hydraulic rock drilling machine, wherein the at least one apparatus comprises at least one pressure sensing device for sensing pressure of fluid inside the hydraulic rock drilling machine. The rock drilling machine comprises at least one control unit configured to receive sensed pressure data from the at least one pressure sensing device configured to process the received sensing data and configured to provide monitoring data in accordance with a control strategy input to the at least one control unit. The rock drilling machine comprises an oil mist lubrication system for providing pressurized air-oil mist flow inside the body and the at least one pressure sensing device is configured to sense pneumatic pressure fluctuations of the air-oil mist prevailing inside the body caused by reciprocating movement of the hydraulically operated reciprocating percussion piston of the hydraulic percussion device.

An advantage of the disclosed solution is that reciprocating movement of a hydraulically movable percussion piston can be monitored conveniently by sensing gas pressure variations inside the machine. The gathered gas pressure data may be analyzed and implemented in a versatile manner. Use and mounting of the pneumatic sensing means is easy. Furthermore, the pneumatic pressure sensors are durable and inexpensive.

An additional advantage is that the disclosed pneumatic monitoring system may substitute other known monitoring systems based on complicated, vulnerable, unstable and expensive sensing means and arrangements.

According to an example, the control unit is configured to detect pneumatic pressure variations in the sensing data and is configured to determine percussion rate of the percussion device in response to detected pneumatic pressure variations.

According to an example, the control unit is configured to detect pneumatic pressure variations in the sensing data and is configured to determine length of travel of a piston of the percussion device in response to detected pneumatic pressure variations. For example, the pressure change is inversely proportional to volume change that is caused by the piston movement and this could be converted to travelling distance of the piston.

According to an example, the control unit is configured to detect pneumatic pressure variations in the sensing data and is configured to determine striking moment of time of a piston of the percussion device in response to detected pneumatic pressure variations. The striking moments can be noted as peak values in the pressure sensing data. The peak values in function of time may be either highest or lowest values depending on whether the pneumatic pressure is detected at front of the piston or at its rear.

According to an example, the control unit is configured to detect a so called striking point on the basis of the above mentioned data. This may be useful in order to detect whether feeding of the rock drilling machine is correct or not. The control unit may also determine suitable control values for feed force and rate. Thereby the rock breaking process can be controlled to be as effective as possible and without causing unnecessary loads to the structure.

According to an example, the control unit is configured to detect pneumatic pressure variations in the sensing data and is configured to determine and analyze any other details regarding the movement of the piston. The control unit may also be provided with additional sensing signals from other type of sensor and measuring devices. Then the control unit may combine the gathered data and may calculate in a versatile manner different characterizing values for control and monitoring purposes.

According to an example, the control unit is configured to detect pneumatic pressure variations in the sensing data and is configured to determine and analyze smoothness of movement of the piston. When abnormal movements, such as jerking and delays are noted, it may indicate of wearing or damage of a control valve, for example.

According to an example, the control unit is configured to determine speed of the piston in both directions, i.e. in impact and return direction on the basis of the received sensing data. The determined speed of the piston provides valuable information on used impact energy and recoil. In other words, operation and contact between the rock and a tool may provide information on rock material being broken. The control unit may be provided with suitable algorithms and programs for analyzing and calculating the needed data on the basis of the pneumatic pressure data. The gathered rock data may be utilized for controlling the actual rock breaking and may also be utilized later for other purposes such as when considering reinforcing of the rock.

According to an example, the control unit is configured to compare the sensed pneumatic pressures to input reference data and is configured indicate detected deviations. Detected abnormal pressure values may trigger the control unit to initiate execution of further analyzing and control measures. Further, the control unit may indicate an operator of the detected deviations.

According to an example, the control unit is provided with at least one pressure limit value and the control unit is configured to compare the sensed pneumatic pressures to the input pressure limit value.

According to an example, the control unit is configured to store data on sensed previous pneumatic pressures and is configured to compare newly sensed pneumatic pressures with the stored history data on sensed pneumatic pressures in order to notify deviations and trends in the operation of the hydraulic rock drilling machine.

According to an example, the control unit is provided with several input scenarios based on which the control unit is configured to determine condition state of the hydraulic rock drilling machine itself, condition state of lubrication system of the hydraulic rock drilling machine or operational situation or condition of the rock drilling process.

According to an example, the pressure sensing device is a pressure sensor or pressure sensing apparatus or element.

According to an example, the pressure sensing device is a pneumatic pressure sensor.

According to an example, the pressure sensing device is a hydraulic pressure sensor which is now configured to sense pneumatic pressures.

According to an example, the pneumatic pressure sensing device is a low pressure sensor operable under pressures of 10 bar. An advantage of this embodiment is that low pressure sensors are inexpensive and well available. Furthermore, their structure and operation may be reliable.

According to an example, the pneumatic pressure inside the rock drilling machine is sensed indirectly whereby this embodiment differs from the ones disclosed above in embodiments using pressure sensors. The sensing device may be configured to sense effects of the pneumatic pressure fluctuations by utilizing other sensing technologies. The sensing device may comprise force sensors, torque sensors, acceleration sensors or any other sensors of devices suitable for the purpose. Thus, the sensing device may be a strain gauge, for example.

According to an example, the solution relates to a hydraulic rock drilling machine, which is intended to be mounted to a working machine and comprises a body and a percussion device, which is hydraulically operable and mounted inside the body. The percussion device generates impact pulses by means of a reciprocating piston to a tool mountable to a front end of the body. The machine further comprises one or more pneumatic sensors for sensing pneumatic pressure inside the body in order to monitor pneumatic pressure fluctuation caused by the piston of the hydraulic percussion device.

According to an example, the rock drilling machine comprises a rotation device for turning a drilling tool around its longitudinal axis.

According to an example, the rock drilling machine is provided with an oil mist lubrication system for providing pressurized air-oil mist flow inside the body. The rock drilling machine is provided with at least one pneumatic sensor for sensing pneumatic pressure of the air-oil mist prevailing inside the body. In other words, pressure fluctuation of the lubricating mist is sensed and the data on the fluctuation may be analyzed and used as it is disclosed in several embodiments in this document.

According to an example, the rock drilling machine comprises an oil mist lubrication system for providing pressurized air-oil mist flow inside the body. The rock drilling machine comprises a shank at a front end of the body for connecting a drilling tool. The shank is rotated by means of a rotating device via a gearing surrounding the shank. The oil mist lubricating system lubricates a front space surrounding a rear end portion of the shank and the gearing. One or more pneumatic sensors are in pneumatic connection with the front space and are arranged to sense pneumatic pressure of the air-oil mist prevailing inside the front space.

According to an example, the rock drilling machine comprises a rear space at a rear end portion of the body. The rear space is limited by a rear cover mounted releasably to the body. Further, the rear space is in pneumatic communication with a rear end of a reciprocating piston of the percussion device. The at least one pneumatic sensor is in pneumatic connection with the rear space and is arranged to sense pneumatic pressure prevailing inside the rear space.

According to an example, the mentioned rear space is in fluid communication via a venting channel to an air-oil lubrication system. Then the pneumatic pressure of the rear space may be sensed either directly or by sensing pressure of the air-oil lubrication system.

According to an example, the rock drilling machine comprises a feed port for feeding the pressurized air-oil mist, and lubricating ducts for conveying the air-oil mist to at least one lubricating target inside the body. One or more pneumatic sensors are arranged to sense pneumatic pressure prevailing inside the feed port or the lubricating ducts.

According to an example, the disclosed pneumatic sensor is mounted in direct connection with the inner space of the monitored inner space of the rock drilling machine. Then the pneumatic sensor is mounted close to the monitored inner space. The pneumatic sensor may then have direct exposure to the inner space and no pressure losses and damping phenomena exists.

According to an example, the disclosed pneumatic sensor is mounted directly to a body, a basic structure component or cover limiting the inner space. When the sensor is directly mounted, the monitoring may be sensitive and accurate measuring results can be gathered. Further, the mounting may be rigid and simple. For example, the basic structure of the machine may have an opening provided with inner threads and the pneumatic sensor provided with outer threads may simply be screw mounted.

According to an example, the disclosed pneumatic sensor is connected by means of a pneumatic channel to the monitored inner space. The pneumatic channel may be a tube, hose or a drilling made to the basic structure. Then the pneumatic sensor may be located at a short distance from the monitored inner space. The distance between the monitored inner space and the pneumatic sensor is preferably as short as possible in order to ensure accurate sensing. An advantage of this embodiment is that it provides several alternative possibilities for the mounting of the sensors and when the location of the sensors may be selected more freely, thanks to the connecting pneumatic channel, the sensors may be placed to positions where they are well protected and where is free space for them.

According to an example, the rock drilling machine may be provided with quick connect couplings for mounting the disclosed pneumatic sensors in a removable manner to the monitored machine. Then the sensors are easy to mount by anyone and may be changed if needed. Further, the machine may be provided with the quick couplings at the factory and may be equipped with the sensors later on. The sensor may be coupled also for duration of a special monitoring period and may be thereafter easily removed, if so desired.

According to an example, the rock drilling machine is provided with a dedicated monitoring space which is pressurized with gas and inside which a rear end of the piston of the percussion device is configured to move. One or more pneumatic sensors are in pneumatic connection with the dedicated monitoring space and are configured to detect fluctuating pneumatic pressure caused by the reciprocating rear end of the piston.

According to an example, the above mentioned dedicated monitoring space is formed only for the monitoring purpose. In this embodiment, the space is not for lubrication purposes.

According to an example, constant gas pressure is fed to the mentioned dedicated monitoring space.

According to an example, the mentioned dedicated monitoring space is prefilled with gas. The space is only provided with a gas feed port. No gas flow exists through the space.

According to another example, the disclosed solution relates to a method. The method relates to monitoring operation of a hydraulic rock drilling machine. The method comprises providing the rock drilling machine described above. In the method prevailing pressure inside a body of the rock drilling machine is sensed by means of at least one pneumatic pressure sensing device. The sensed pneumatic pressure data is transmitted to at least one control unit wherein the sensed pneumatic pressure data is processed under for generating monitoring data.

According to an example, the method comprises determining operational condition of the rock drilling machine by examining the monitoring data.

According to an example, the mentioned operational condition data may comprise data on rock material being processed since by analyzing the pneumatic pressure data it is possible to detect whether the tool is penetrating into a hard or soft rock and whether there are cavities or fractures in the rock. Thereby, characterized features of the rock may be determined and the gathered data may be stored and taken into account in the control of the machine and also in following other measures executed at the work site.

According to an example, the mentioned operational condition data may comprise data on recoil of the piston in the return direction. The detected recoil and movement speed in the return direction may be analyzed in more detailed and utilized for generating control parameters or performance factors. By means of analyzing the recoil i.e. amount of energy transmitted back to the percussion device from the rock being broken it is possible to determine properties of the rock, to determine whether operator of the machine uses the machine in a right manner and to determine whether proper settings and control parameters are implemented.

According to an example, the mentioned operational condition data may comprise data on physical contact of the tool with the rock material being processed.

According to an example, the mentioned operational condition data may comprise data on speed of the piston in the return direction. Further, the system may monitor the movement of the piston and detect if any abnormal movement or speed exists. These issues may indicate that one or more components of the machine is failed and needs to be replaced before they cause damage to other components.

According to an example, the mentioned operational condition data may comprise data on moment of generated impact and moment when the piston is in its rear dead point.

According to an example, the method further comprises utilizing the monitoring data for providing predictive maintenance for the rock drilling machine. The monitoring may show that one or more components of the percussion device are not working properly and that abnormal behavior can therefore be notified. For example, it is possible to detect if a control valve controlling working cycle of the piston is failed. Movement of the control valve in opposite directions may be nonlinear and this can be noted by the disclosed monitoring. The control valve can be substituted with a new one early enough before the entire percussion device will be damaged. The disclosed monitoring provides usage based triggers for the service measures and ensure that the percussion device operates effectively and that no unpredictable interruptions occur in the operation of the rock drilling machine.

According to an example, the method further comprises controlling operating parameters of the rock drilling machine on the basis of the monitoring data. Then the monitoring data is utilized for detecting different drilling situations and phenomenon and suitable amendments to control parameters are made for controlling the operation. The control parameters may adjust operation of the percussion device. It is possible to adjust generated percussion rate and impact energy by adjusting feeding of hydraulic fluid to the percussion device. In addition to, it is also possible to adjust other operational parameters of the rock drilling device and its assisting actuators. It is possible to adjust feed force of the drilling device towards the rock surface, for example. This way contact between the rock and the tool may be affected. Rotation of the tool may be adjusted as well as flushing.

According to an example, the disclosed pneumatic pressure sensing system may also be retrofitted to an existing hydraulic rock drilling machine. This way the machines may be updated with this new kind of monitoring system whenever desired.

According to an example, the control unit of the disclosed monitoring system may be located on a carrier of a rock drilling rig or excavator. The sensing data gathered by means of the pneumatic pressure sensing devices may be transmitted to the control unit by means of wired or wireless data communication path. Alternatively, or in addition to, the sensing data may be transmitted to one or more external control units, which may be personal computers, servers, cloud services or electrical terminal devices. In some cases it may be possible to provide rock drilling machine with a control unit and then provide it with a data communication connection with one or more other control devices or actuators.

According to an example, the solution may relate to a rock drilling rig, comprising: a movable carrier; at least one drilling boom connected movably to the carrier and equipped with a rock drilling unit; and wherein the rock drilling unit comprises a feed beam and a hydraulic rock drilling machine supported movably on the feed beam; and wherein the drilling machine is in accordance with the features disclosed in this document and includes the disclosed pneumatic pressure sensing system.

### Brief description of the figures

Some embodiments are described in more detail in the accompanying drawings, in which
Figure 1 is a schematic side view of a rock drilling rig wherein a hydraulic rock drilling machine is provided with a pneumatic monitoring system,
Figure 2 is a schematic view of a work machine - not according to the invention and present for illustration purposes only - wherein a hydraulic rock breaking hammer is provided with a pneumatic monitoring system,
Figure 3 is a schematic view of a hydraulic rock drilling machine and pneumatic sensors arranged at possible measuring points,
Figure 4 is a diagram showing some pressure curves in function of time,
Figure 5 is a diagram showing some basic features relating to a pneumatic monitoring system,
Figure 6 is a diagram showing possible use cases for the generated monitoring data,
Figure 7 is a schematic view of a hydraulic rock drilling machine - not according to the invention and present for illustration purposes only - provided with a circulation lubrication system and comprising several pneumatic sensors arranged at possible measuring points, and
Figure 8 a schematic view of a rear space of the breaking machine comprising an inner space with a pneumatic space and pneumatic sensing arrangement.

For the sake of clarity, the figures show some embodiments of the disclosed solution in a simplified manner. In the figures, like reference numerals identify like elements.

### Detailed description of some embodiments

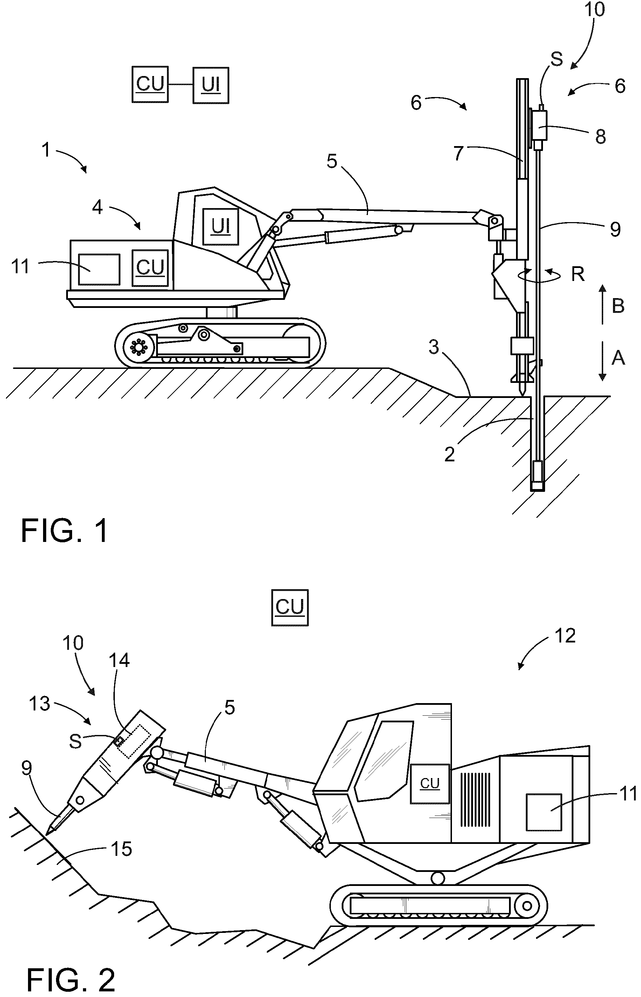

Figure 1 shows a rock drilling rig 1 intended for drilling drill holes 2 to a rock surface 3. In this case the rock drilling rig 1 is intended for surface drilling, but the same principles disclosed in this document apply also for underground drilling machines. The rock drilling rig 1 comprises a movable carrier 4 and one or more drilling booms 5 connected to the carrier 4. At a distal end portion of the drilling boom 5 is a rock drilling unit 6 provided with a feed beam 7 and a rock drilling machine 8 supported on it. A drilling tool 9 is connectable to the rock drilling machine 8. The rock drilling machine 8 is a hydraulic rock breaking machine 10 which is connected to a hydraulic system powered by a hydraulic unit 11. The rock drilling machine 8 comprises a percussion device for generating impact pulses to the tool 9 in impact direction A. The rock drilling machine 8 also comprises a rotating device for turning R the tool 9 around its longitudinal axis. The rock drilling machine 8 is further provided with one or more pneumatic sensors S, whereby the rock drilling machine 8 is instrumented. In other words, the hydraulically operated machine is examined by means of pneumatic sensing means.

The rock drilling rig 1 may comprise one or more control units CU, which receive measuring signals from the sensors S and process the input sensing data. The control unit CU may be a dedicated device intended for the pneumatic monitoring system, or alternatively, a basic control unit of the rig 1 may serve also a processor for the pneumatic monitoring system. Alternatively, or in addition to, the system may comprise one or more external control units CU. Data communication between the sensors S and the on-board control unit CU may be wired or wireless. Further, the system may comprise at least one user interface UI or display unit through which the system may provide an operator with the monitoring data and by means of which the operator may input data, parameters, computer programs and make selections.

The following example is not according to the invention and present for illustration purposes only. Figure 2 discloses an excavator 12 which is provided with a boom 5 and a hydraulic breaking hammer 13 at a distal end of the boom 5. The breaking hammer 13 is a hydraulic breaking machine 10 connected to a hydraulic system of the excavator 12 and is powered by means of a hydraulic unit 11. The breaking hammer 13 comprises a percussion device 14 which is intended to provide a tool 9 with impact pulses for breaking rock material 15. The breaking hammer 13 is provided with one or more pneumatic sensors S which monitor operation of the machine 10. Sensing data is transmitted to an on-board control unit CU or to an external control unit. The sensors S may detect pressure fluctuation inside the breaking hammer, which fluctuation is caused by a reciprocating percussion piston of the percussion device 14.

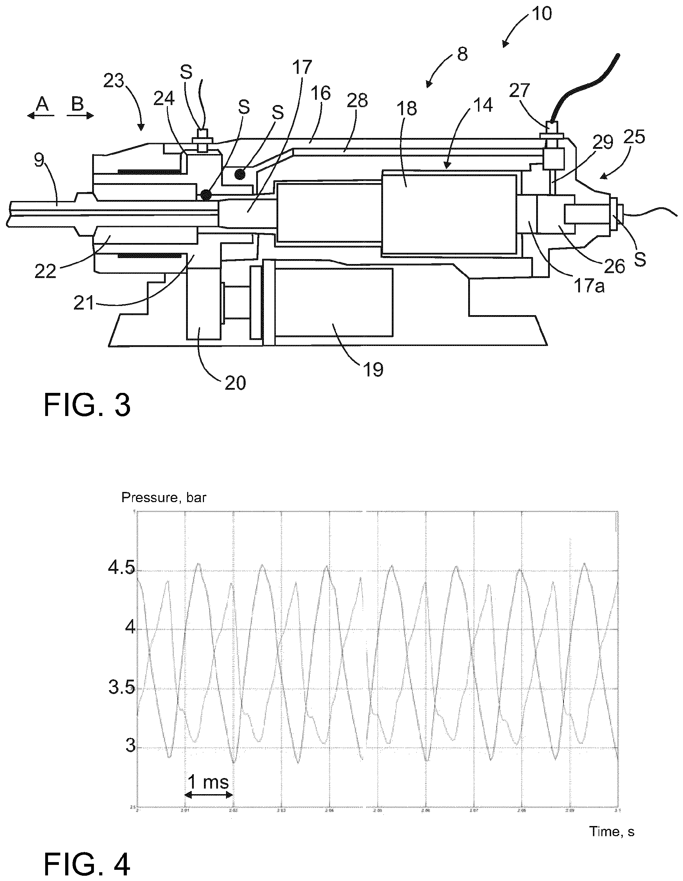

Figure 3 is a highly simplified presentation of a hydraulic rock drilling machine 8. The drilling machine 8 comprises a main body 16 inside which is a percussion device 14, comprising a percussion piston 17. The piston 17 moves in a reciprocating manner towards impact direct A and return direction B. A front end of the piston 17 strikes rear end of a tool 9. The tool 9 transmits impact pulses to a rock surface processed. The piston 17 is controlled by means of control valve 18, which may be located around the piston 17. The tool 9 is rotated around its longitudinal axis by means of a rotating device 19, which may be arranged to transmit the generated rotation via a gear 20 and rotation bushing 21 to a chuck 22 which receives the tool 9 or shank adapter. A front cover 23 may form a gear housing 24 surrounding the rotation means. At an opposite rear end of body 16 is a rear cover 25 which comprises an inner rear space 26 which is in communication with a rear end 17a of the piston 17. The machine 10 may be provided with an air-oil lubrication system, whereby air-oil mist is fed through a feed port 27 inside the rear cover 25. The gaseous lubrication medium is conveyed through lubrication channel 28 to the front part of the machine 10 in order to lubricate the rotation gearing, the shank adapter and their bearings. Thus, inside the gearing housing 24 is an inner space wherein pressurized gaseous lubrication medium prevails. As it is shown, there may be one or more pneumatic sensors S mounted at the front part of the machine 10 for detecting gas pressures therein. Further, the air-oil lubrication system may be in fluid connection with the inner rear space 26. There may be a narrow venting channel 29 for allowing the lubrication system to be vented to the inner rear space 26 whereby gas pressure prevails also therein. The rear cover 25 is provided with a pneumatic sensor S for sensing pressure in the space 26. When the rear end portion 17a of the piston 17 moves forwards and backwards, it causes pressure fluctuation inside the space 26 and this can be sensed by means of the sensor S. The movement of the piston 17 causes pneumatic pressure variations also in the front part of the machine 10 and they can also be detected by means of the sensors located at the front end portion.

An alternative to the solution shown in Figure 3 is that there is no venting channel 29 to the lubrication system, but instead there is a gas feed port for providing the inner space 26 with any other gaseous medium. Also the pressure variations can be measured by means of one or more pneumatic sensors S.

Figure 4 shows two pressure curves of pneumatic sensors mounted to a rear portion of a percussion device (a curve with greater amplitude) and mounted to a front portion (smaller amplitude). Movement of a piston of the percussion device may be analyzed based on the pressure data and the curves. When the piston moves in impact direction, then pressure decreases at the rear portion and correspondingly when the piston moves in return direction, pressure increases. More detailed analyzing programs allow use of the pressure data in a versatile manner. It has been noticed, that the most interesting curves are gathered from the sensors inside a rear cover of the machine and in volume spaces where the piston is striking. Thus, in practical solutions, the rear cover appears to be the best place to measure. Rear cover area is usually well accessible and, in many cases, a threaded hole that could be used for a sensor already exists therein or can be easily made.

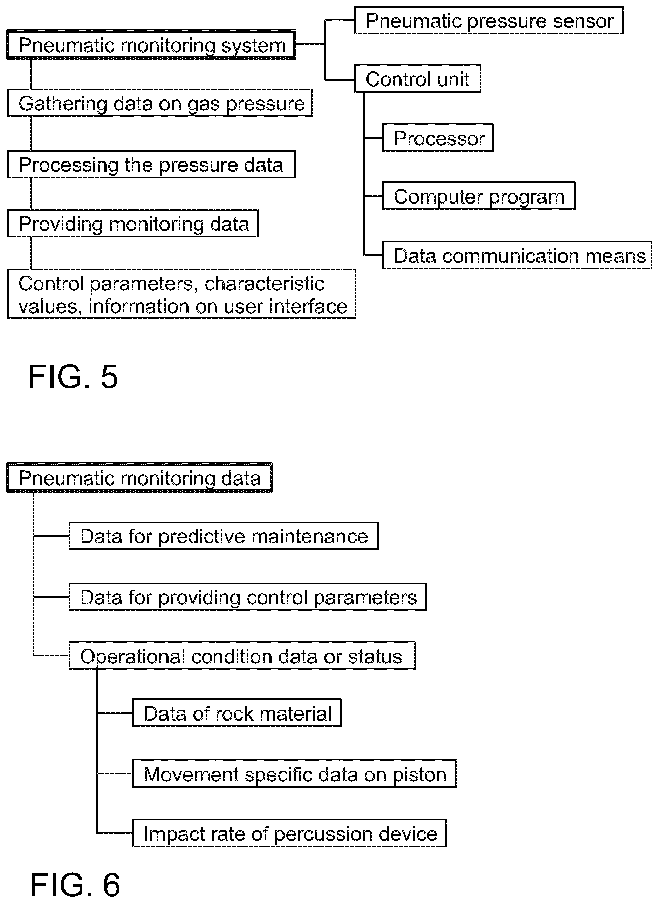

Figure 5 shows a simplified diagram showing basic components of the disclosed pneumatic monitoring system and basic process steps executed in the monitoring. The presented issues have already been disclosed above in this document.

Figure 6 discloses some possible applications for the monitoring data produced by the disclosed pneumatic monitoring system. The figure is self-explanatory, and further, the presented issues have already been disclosed above in this document.

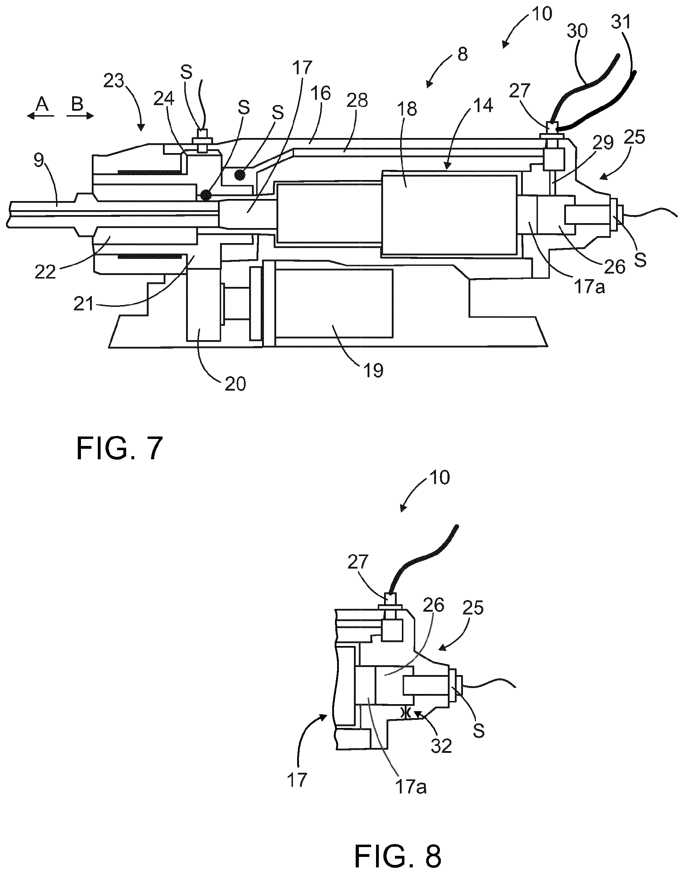

The following example is not according to the invention and present for illustration purposes only. Figure 7 discloses a rock drilling machine provided with an oil circulation system wherein pressurized air is fed through a channel 30 and lubrication oil is fed through a channel 31. The pressurized air makes the oil to circulate inside the body. Otherwise the solution of Figure 7 may correspond to that shown in Figure **3****.**

Figure 8 discloses an end cover 25 of a breaking machine. An inner space 26 is provided with a breathing channel 32 which may be provided with a throttle device, which may have fixed adjustment or it may be adjustable. In this case the inner space is not connected to the lubrication system as it is in solutions disclosed in Figures 3 and **7****.** A sensor S may detect pressure fluctuations inside the space 26 and caused by the reciprocating movement of the hydraulically moved piston 17.

The drawings and the related description are only intended to illustrate the idea of the invention. In its details, the invention may vary within the scope of the claims.

## Claims

1. A hydraulic rock drilling machine (8), which is intended to be mounted to a work machine (1, 12) and comprises:
a body (16);
a percussion device (14) mounted inside the body (16), the percussion device (14) being hydraulically operating, whereby a reciprocating percussion piston (17) of the percussion device (14) is moved by means of pressurized hydraulic fluid, and configured to generate impact pulses by means of the reciprocating percussion piston (17) to a tool (9) mountable to a front end of the body (16); and
at least one apparatus for sensing prevailing fluid pressure inside the hydraulic rock drilling machine (8) wherein the at least one apparatus comprises:
at least one pressure sensing device (S) for sensing pressure of fluid inside the hydraulic rock drilling machine (8) ;
at least one control unit (CU) configured to receive sensed pressure data from the at least one pressure sensing device;
and wherein the at least one control unit (CU) is configured to process the received sensing data and to provide monitoring data in accordance with a control strategy input to the at least one control unit (CU);
**characterized in that**
the hydraulic rock drilling machine (8) comprises an oil mist lubrication system for providing pressurized air-oil mist flow inside the body (16); and
the at least one pressure sensing device (S) is configured to sense pneumatic pressure fluctuations of the air-oil mist prevailing inside the body (16) caused by reciprocating movement of the hydraulically operated reciprocating percussion piston (17) of the hydraulic percussion device (14).

2. The hydraulic rock drilling machine as claimed in claim 1, **characterized in that**
the hydraulic rock drilling machine (8) further comprises the drilling tool (9) at a front end of the body (16), or a shank adapter for connecting the drilling tool (9);
the shank adapter or the drilling tool (9) is rotated by means of a rotating device (19) via a gearing (20, 21) surrounding the shank adapter or the drilling tool (9);
the oil mist lubricating system is configured to lubricate a front space surrounding a rear end portion of the shank adapter or the drilling tool (9) and the gearing (20, 21); and
one or more pressure sensing device (S) of the at least one pressure sensing device (S)is in pneumatic connection with the front space and is arranged to sense pneumatic pressure of the air-oil mist prevailing inside the front space.

3. The hydraulic rock drilling machine as claimed in -claim 1 or 2, **characterized in that**
the rock drilling machine (8) comprises a rear space (26) at a rear end portion of the body (16);
the rear space (26) is limited by a rear cover (25) mounted releasably to the body (16);
the rear space (26) is in pneumatic communication with a rear end of the reciprocating percussion piston (17) of the percussion device (14); and
a pressure sensing device (S) of the at least one pressure sensing device (S) is in pneumatic connection with the rear space (26) and is arranged to sense pneumatic pressure prevailing inside the rear space (26).

4. The hydraulic rock drilling machine as claimed in any one of the preceding claims 1 - 3, **characterized in that**
the hydraulic rock drilling machine (8) comprises a feed port (27) for feeding the pressurized air-oil mist, and lubricating ducts (28) for conveying the air-oil mist to at least one lubricating target inside the body (16); and
at least pressure sensing device (S) of the at least one pressure sensing device (S) is arranged to sense pneumatic pressure prevailing inside the feed port (27) or the lubricating ducts (28).

5. The hydraulic rock drilling machine as claimed in any one of the preceding claims 1 - 4, **characterized in that**
any pressure sensing device (S) of the at least one pressure sensing device (S) is mounted in direct connection with the inner space of the monitored inner space of the hydraulic rock drilling machine (8), whereby said any pressure sensing device (S) is mounted close to the monitored inner space.

6. The hydraulic rock drilling machine as claimed in any one of the preceding claims 1 - 5, **characterized in that**
the hydraulic rock drilling machine (8) is provided with a dedicated monitoring space which is pressurized with the pressurized air-oil mist and inside which a rear end (17a) of the reciprocating percussion piston (17) of the percussion device is configured to move;
and wherein a pressure sensing device (S) of the at least one pressure sensing device (S) is in pneumatic connection with the dedicated monitoring space and is configured to detect fluctuating pneumatic pressure caused by the reciprocating rear end (17a) of the reciprocating percussion piston (17).

7. A method for monitoring operation of a hydraulic rock drilling machine (8), wherein the method comprises:
providing a hydraulic rock drilling machine (8) according to claim 1;
sensing pneumatic pressure of the prevailing air-oil mist inside the body (16) of the hydraulic rock drilling machine (8) by means of the at least one sensing device (S);
transmitting the sensed pneumatic pressure data to the at least one control unit (CU); and
processing the sensed pneumatic pressure data in the control unit (CU) and generating monitoring data.

8. The method as claimed in claim 7, comprising
determining, by examining the monitoring data, an operational condition of the percussion device (14) of the hydraulic rock drilling machine (8), a condition state of the oil mist lubrication system of the hydraulic rock drilling machine (8) or an operational situation or condition of the rock drilling process.

9. The method as claimed in claim 7 or 8, comprising
utilizing the monitoring data for providing predictive maintenance for one or more components of the percussion device (14) of the hydraulic rock drilling machine (8).

10. The method as claimed in any one of the preceding claims 7 - 9, comprising
controlling operating parameters of the hydraulic rock drilling machine (8) on the basis of the monitoring data, whereby the monitoring data is utilized for detecting different rock breaking situations and for controlling them.

11. The method as claimed in any one of the preceding claims 7 - 10, comprising
determining speed of the reciprocating percussion piston (17) of the percussion device (14) of the hydraulic rock drilling machine (8) in impact direction (A) and return direction (B) in response to the sensed pneumatic pressure fluctuations.

## Patentansprüche

1. Hydraulische Gesteinsbohrmaschine (8), die zum Montieren an eine Arbeitsmaschine (1, 12) bestimmt ist und umfasst:
einen Körper (16);
eine Schlagvorrichtung (14), die im Inneren des Körpers (16) montiert ist, wobei die Schlagvorrichtung (14) hydraulisch betrieben wird, wobei ein hin- und hergehender Schlagkolben (17) der Schlagvorrichtung (14) mittels unter Druck stehenden Hydraulikfluids bewegt wird, und konfiguriert ist, um mittels des hin- und hergehenden Schlagkolbens (17) Stoßimpulse auf ein Werkzeug (9) zu erzeugen, das an einem vorderen Ende des Körpers (16) montierbar ist; und
mindestens eine Einrichtung zum Erfassen eines vorherrschenden Fluiddrucks im Inneren der hydraulischen Gesteinsbohrmaschine (8), wobei die mindestens eine Einrichtung umfasst:
mindestens eine Druckerfassungsvorrichtung (S) zum Erfassen von Fluiddruck im Inneren der hydraulischen Gesteinsbohrmaschine (8);
mindestens eine Steuereinheit (CU), die konfiguriert ist, um erfasste Druckdaten von der mindestens einen Druckerfassungsvorrichtung zu empfangen;
und wobei die mindestens eine Steuereinheit (CU) konfiguriert ist, um die empfangenen Erfassungsdaten zu verarbeiten und um Überwachungsdaten gemäß einer Steuerstrategie bereitzustellen, die in die mindestens eine Steuereinheit (CU) eingegeben wird;
**dadurch gekennzeichnet, dass**
die hydraulische Gesteinsbohrmaschine (8) ein Ölnebelschmiersystem zum Bereitstellen von Druckluft-Ölnebel-Strom im Inneren des Körpers (16) umfasst; und
die mindestens eine Druckerfassungsvorrichtung (S) konfiguriert ist, um pneumatische Druckschwankungen des im Inneren des Körpers (16) vorherrschenden Luft-Öl-Nebels zu erfassen, die durch die Hin- und Herbewegung des hydraulisch betriebenen hin- und hergehenden Schlagkolbens (17) der hydraulischen Schlagvorrichtung (14) verursacht werden.

2. Hydraulische Gesteinsbohrmaschine nach Anspruch 1, **dadurch gekennzeichnet, dass**
die hydraulische Gesteinsbohrmaschine (8) weiter das Bohrwerkzeug (9) an einem vorderen Ende des Körpers (16) oder einen Schaftadapter zum Verbinden des Bohrwerkzeugs (9) umfasst;
der Schaftadapter oder das Bohrwerkzeug (9) mittels einer Drehvorrichtung (19) über ein den Schaftadapter oder das Bohrwerkzeug (9) umgebendes Getriebe (20, 21) gedreht wird;
das Ölnebelschmiersystem konfiguriert ist, um einen vorderen Raum zu schmieren, der einen hinteren Endabschnitt des Schaftadapters oder des Bohrwerkzeugs (9) und des Getriebes (20, 21) umgibt; und
eine oder mehrere Druckerfassungsvorrichtungen (S) der mindestens einen Druckerfassungsvorrichtung (S) in pneumatischer Verbindung mit dem vorderen Raum stehen und angeordnet sind, um den pneumatischen Druck des im vorderen Raum vorherrschenden Luft-Öl-Nebels zu erfassen.

3. Hydraulische Gesteinsbohrmaschine nach Anspruch 1 oder 2, **dadurch gekennzeichnet, dass**
die Gesteinsbohrmaschine (8) einen hinteren Raum (26) an einem hinteren Endabschnitt des Körpers (16) umfasst;
der hintere Raum (26) durch eine lösbar am Körper (16) montierte hintere Abdeckung (25) begrenzt ist;
der hintere Raum (26) in pneumatischer Verbindung mit einem hinteren Ende des hin- und hergehenden Schlagkolbens (17) der Schlagvorrichtung (14) steht; und
eine Druckerfassungsvorrichtung (S) der mindestens einen Druckerfassungsvorrichtung (S) in pneumatischer Verbindung mit dem hinteren Raum (26) steht und angeordnet ist, um den im Inneren des hinteren Raumes (26) vorherrschenden pneumatischen Druck zu erfassen.

4. Hydraulische Gesteinsbohrmaschine nach einem der vorstehenden Ansprüche 1-3, **dadurch gekennzeichnet, dass**
die hydraulische Gesteinsbohrmaschine (8) einen Zufuhranschluss (27) zum Zuführen des unter Druck stehenden Luft-Öl-Nebels und Schmierkanäle (28) zum Fördern des Luft-Öl-Nebels zu mindestens einem Schmierziel im Inneren des Körpers (16) umfasst; und
mindestens eine Druckerfassungsvorrichtung (S) der mindestens einen Druckerfassungsvorrichtung (S) angeordnet ist, um den im Inneren des Zufuhranschlusses (27) oder der Schmierkanäle (28) vorherrschenden pneumatischen Druck zu erfassen.

5. Hydraulische Gesteinsbohrmaschine nach einem der vorstehenden Ansprüche 1-4, **dadurch gekennzeichnet, dass**
jede beliebige Druckerfassungsvorrichtung (S) der mindestens einen Druckerfassungsvorrichtung (S) in direkter Verbindung mit dem Innenraum des überwachten Innenraums der hydraulischen Gesteinsbohrmaschine (8) montiert ist, wobei die beliebige Druckerfassungsvorrichtung (S) in der Nähe des überwachten Innenraums montiert ist.

6. Hydraulische Gesteinsbohrmaschine nach einem der vorstehenden Ansprüche 1-5, **dadurch gekennzeichnet, dass**
die hydraulische Gesteinsbohrmaschine (8) mit einem dedizierten Überwachungsraum bereitgestellt ist, der mit dem unter Druck stehenden Luft-Öl-Nebel unter Druck gesetzt wird und in dessen Inneren ein hinteres Ende (17a) des hin- und hergehenden Schlagkolbens (17) der Schlagvorrichtung konfiguriert ist, sich zu bewegen;
und wobei eine Druckerfassungsvorrichtung (S) der mindestens einen Druckerfassungsvorrichtung (S) in pneumatischer Verbindung mit dem dedizierten Überwachungsraum steht und konfiguriert ist, um schwankenden pneumatischen Druck zu erkennen, der durch das hin- und hergehende hintere Ende (17a) des hin- und hergehenden Schlagkolbens (17) verursacht wird.

7. Verfahren zum Überwachen des Betriebs einer hydraulischen Gesteinsbohrmaschine (8), wobei das Verfahren umfasst:
Bereitstellen einer hydraulischen Gesteinsbohrmaschine (8) nach Anspruch 1;
Erfassen von pneumatischem Druck des vorherrschenden Luft-Öl-Nebels im Inneren des Körpers (16) der hydraulischen Gesteinsbohrmaschine (8) mittels der mindestens einen Erfassungsvorrichtung (S);
Übertragen der erfassten pneumatischen Druckdaten an die mindestens eine Steuereinheit (CU); und
Verarbeiten der erfassten pneumatischen Druckdaten in der Steuereinheit (CU) und Erzeugen von Überwachungsdaten.

8. Verfahren nach Anspruch 7, umfassend
Bestimmen durch Untersuchen der Überwachungsdaten eines Betriebszustands der Schlagvorrichtung (14) der hydraulischen Gesteinsbohrmaschine (8), eines Zustands des Ölnebelschmiersystems der hydraulischen Gesteinsbohrmaschine (8) oder einer Betriebssituation oder eines Betriebszustands des Gesteinsbohrprozesses.

9. Verfahren nach Anspruch 7 oder 8, umfassend
Nutzen der Überwachungsdaten zum Bereitstellen vorausschauender Wartung für eine oder mehrere Komponenten der Schlagvorrichtung (14) der hydraulischen Gesteinsbohrmaschine (8).

10. Verfahren nach einem der vorstehenden Ansprüche 7-9, umfassend
Steuern von Betriebsparametern der hydraulischen Gesteinsbohrmaschine (8) auf der Basis der Überwachungsdaten, wobei die Überwachungsdaten zum Erkennen verschiedener Gesteinsbruchsituationen und zu deren Steuerung genutzt werden.

11. Verfahren nach einem der vorstehenden Ansprüche 7-10, umfassend
Bestimmen einer Geschwindigkeit des hin- und hergehenden Schlagkolbens (17) der Schlagvorrichtung (14) der hydraulischen Gesteinsbohrmaschine (8) in Stoßrichtung (A) und Rücklaufrichtung (B) als Reaktion auf die erfassten pneumatischen Druckschwankungen.

## Revendications

1. Machine de forage de roche hydraulique (8), qui est destinée à être montée sur une machine de travail (1, 12) et comprend :
un corps (16) ;
un dispositif de percussion (14) monté à l'intérieur du corps (16), le dispositif de percussion (14) étant à fonctionnement hydraulique, moyennant quoi un piston de percussion alternatif (17) du dispositif de percussion (14) est déplacé au moyen d'un fluide hydraulique sous pression, et configuré pour générer des impulsions d'impact au moyen du piston de percussion alternatif (17) sur un outil (9) pouvant être monté sur une extrémité avant du corps (16) ; et
au moins un appareil pour détecter la pression de fluide régnant à l'intérieur de la machine de forage de roche hydraulique (8), dans lequel le au moins un appareil comprend :
au moins un dispositif de détection de pression (S) pour détecter une pression de fluide à l'intérieur de la machine de forage de roche hydraulique (8) ;
au moins une unité de commande (CU) configurée pour recevoir des données de pression détectées à partir du au moins un dispositif de détection de pression ;
et dans lequel la au moins une unité de commande (CU) est configurée pour traiter les données de détection reçues et pour fournir des données de surveillance conformément à une stratégie de commande entrée dans la au moins une unité de commande (CU) ;
**caractérisée en ce que**
la machine de forage de roche hydraulique (8) comprend un système de lubrification par brouillard d'huile pour fournir un flux de brouillard d'air-huile sous pression à l'intérieur du corps (16) ; et
le au moins un dispositif de détection de pression (S) est configuré pour détecter des fluctuations de pression pneumatique du brouillard d'air-huile régnant à l'intérieur du corps (16) provoquées par un mouvement alternatif du piston de percussion alternatif à commande hydraulique (17) du dispositif de percussion hydraulique (14).

2. Machine de forage de roche selon la revendication , **caractérisée en ce que**
la machine de forage de roche hydraulique (8) comprend en outre l'outil de forage (9) à une extrémité avant du corps (16), ou un adaptateur de tige pour connecter l'outil de forage (9) ;
l'adaptateur de tige ou l'outil de forage (9) est mis en rotation au moyen d'un dispositif rotatif (19) par l'intermédiaire d'un engrenage (20, 21) entourant l'adaptateur de tige ou l'outil de forage (9) ;
le système de lubrification par brouillard d'huile est configuré pour lubrifier un espace avant entourant une portion d'extrémité arrière de l'adaptateur de tige ou de l'outil de forage (9) et de l'engrenage (20, 21) ; et
un ou plusieurs dispositifs de détection de pression (S) parmi le au moins un dispositif de détection de pression (S) est en connexion pneumatique avec l'espace avant et est agencé pour détecter une pression pneumatique du brouillard d'air-huile régnant à l'intérieur de l'espace avant.

3. Machine de forage de roche selon la revendication 1 ou 2, **caractérisée en ce que**
la machine de forage de roche (8) comprend un espace arrière (26) au niveau d'une portion d'extrémité arrière du corps (16) ;
l'espace arrière (26) est limité par un couvercle arrière (25) monté de manière amovible sur le corps (16) ;
l'espace arrière (26) est en communication pneumatique avec une extrémité arrière du piston de percussion alternatif (17) du dispositif de percussion (14) ; et
un dispositif de détection de pression (S) du au moins un dispositif de détection de pression (S) est en connexion pneumatique avec l'espace arrière (26) et est agencé pour détecter une pression pneumatique régnant à l'intérieur de l'espace arrière (26).

4. Machine de forage de roche selon une quelconque des revendications précédentes 1-3, **caractérisée en ce que**
la machine de forage de roche hydraulique (8) comprend un orifice d'alimentation (27) pour alimenter le brouillard d'air-huile sous pression, et des conduits de lubrification (28) pour transporter le brouillard d'air-huile vers au moins une cible de lubrification à l'intérieur du corps (16) ; et
au moins un dispositif de détection de pression (S) du au moins un dispositif de détection de pression (S) est agencé pour détecter une pression pneumatique régnant à l'intérieur de l'orifice d'alimentation (27) ou des conduits de lubrification (28).

5. Machine de forage de roche selon une quelconque des revendications précédentes 1-4, **caractérisée en ce que**
un quelconque dispositif de détection de pression (S) du au moins un dispositif de détection de pression (S) est monté en liaison directe avec l'espace intérieur de l'espace intérieur surveillé de la machine de forage de roche hydraulique (8), moyennant quoi ledit quelconque dispositif de détection de pression (S) est monté à proximité de l'espace intérieur surveillé.

6. Machine de forage de roche selon une quelconque des revendications précédentes 1-5, **caractérisée en ce que**
la machine de forage de roche hydraulique (8) est pourvue d'un espace de surveillance dédié qui est pressurisé avec le brouillard d'air-huile sous pression et à l'intérieur duquel une extrémité arrière (17a) du piston de percussion alternatif (17) du dispositif de percussion est configurée pour se déplacer ;
et dans lequel un dispositif de détection de pression (S) du au moins un dispositif de détection de pression (S) est en connexion pneumatique avec l'espace de surveillance dédié et est configuré pour détecter une pression pneumatique fluctuante provoquée par l'extrémité arrière alternative (17a) du piston de percussion alternatif (17).

7. Procédé de surveillance de fonctionnement d'une machine de forage de roche hydraulique (8), dans lequel le procédé comprend :
la fourniture d'une machine de forage de roche hydraulique (8) selon la revendication 1 ;
la détection d'une pression pneumatique du brouillard d'air-huile régnant à l'intérieur du corps (16) de la machine de forage de roche hydraulique (8) au moyen du au moins un dispositif de détection (S) ;
la transmission des données de pression pneumatique détectées à l'au moins une unité de commande (CU) ; et
le traitement des données de pression pneumatique détectées dans l'unité de commande (CU) et la génération des données de surveillance.

8. Procédé selon la revendication 7, comprenant
la détermination, en examinant les données de surveillance, d'un état de fonctionnement du dispositif de percussion (14) de la machine de forage de roche hydraulique (8), d'un état de condition du système de lubrification par brouillard d'huile de la machine de forage de roche hydraulique (8) ou d'une situation ou condition de fonctionnement du processus de forage de roche.

9. Procédé selon la revendication 7 ou 8, comprenant
l'utilisation des données de surveillance pour fournir une maintenance prédictive pour un ou plusieurs composants du dispositif de percussion (14) de la machine de forage de roche hydraulique (8).

10. Procédé selon l'une quelconque des revendications précédentes 7-9, comprenant
la commande des paramètres de fonctionnement de la machine de forage de roche hydraulique (8) sur la base des données de surveillance, moyennant quoi les données de surveillance sont utilisées pour détecter différentes situations de rupture de roche et pour les commander.

11. Procédé selon l'une quelconque des revendications précédentes 7-10, comprenant
la détermination d'une vitesse du piston de percussion alternatif (17) du dispositif de percussion (14) de la machine de forage de roche hydraulique (8) en direction d'impact (A) et direction de retour (B) en réponse aux fluctuations de pression pneumatique détectées.
